# EUROPÄISCHE PATENTSCHRIFT

(11) **EP 2 404 503 B1**
(45) Veröffentlichungstag und Bekanntmachung des Hinweises auf die Patenterteilung: **02.09.2015**
(21) Anmeldenummer: 11005440.0
(22) Anmeldetag: 04.07.2011
(51) Int. Cl.: A21D 13/00, B44C 3/06

(54) **Verfahren zum Erstellen eines Blocks, in dessen Inneren wenigstens ein sich farblich absetzendes Objekt eingebettet ist**
Method for producing a block, within which at least one differently coloured object is embedded
Procédé de fabrication d'un bloc à l'intérieur duquel au moins un objet de couleur différente est inclu

(30) Priorität: 07.07.2010 DE 102010026326
(43) Veröffentlichungstag der Anmeldung: 11.01.2012
(73) Patentinhaber: CarvingColors GmbH, 23823 Seedorf (DE)
(72) Erfinder: Schramm, Hauke, Dr., 23823 Seedorf (DE)
(74) Vertreter: Lobemeier, Martin Landolf

(56) Entgegenhaltungen:
- DE-A1- 4 229 897
- DE-A1-102008 045 188
- US-A1- 2001 039 001
- US-B1- 7 615 276

## Beschreibung

Verfahren zum Erstellen eines Blocks, in dessen Inneren wenigstens ein sich farblich absetzendes Objekt eingebettet ist.

Ein Block, in dessen Inneren wenigstens ein sich farblich absetzendes Objekt eingebettet ist, kann beispielsweise als Designobjekt, wie aus der US 7 615 276 B1 bekannt, oder auch im Gesundheitswesen zu therapeutischen Zwecken, wie aus der DE 10 2008 045 188 A1 oder US 2001/0039001 A1 bekannt, eingesetzt werden: Der Patient erhält die Aufgabe, den Block derart durch Feilen oder dergleichen zu bearbeiten, dass das in dem Block befindliche wenigstens eine Objekt herausgearbeitet wird. Der Patient hat so das Gefühl, das Objekt tatsächlich geschaffen zu haben. Andere Anwendungsfälle zum Wiedergeben einer Information durch das eingebettete Objekt sind denkbar, die komplette Verwendung des Blocks ist nicht Bestandteil der Erfindung.

Der Erfindung liegt dagegen die Aufgabe zugrunde, ein Verfahren zum Erstellen eines Blocks, in dessen Inneren wenigstens ein sich farblich absetzendes Objekt eingebettet ist, zu schaffen, das eine kostengünstige Erstellung eines derartigen Blocks, insbesondere unter Verwendung gesundheitlich unbedenklicher Materialien erlaubt.

Erfindungsgemäß wird diese Aufgabe gelöst durch Errechnen einer Vielzahl von aufeinander liegende Ebenen wiedergebenden Schichtbildern des Objekt mittels eines Computers, Bedrucken einer Vielzahl von Blättern mit jeweils einem der Schichtbilder mittels eines Druckers und einer gesundheitlich unbedenklichen Druckertinte, Aufeinanderlegen und Zusammenpressen der bedruckten Schichtbilder und Aktivieren eines in oder auf den Blättern vorhandenen oder auf diese aufgebrachten Bindemitteln zur Bildung des Blocks. Bei dem eingesetzten Bindemittel handelt es sich um Stärke, die durch Auf-oder Einbringen von Wasser auf die einzelnen Blätter bzw. in den Block aktiviert wird.

Die Blätter bestehen dabei aus einem stärke-, zucker-, oder zellulosehaltigen oder aus einem filzartigen Material. Besonders bevorzugt sind sogenannte Esspapieroblaten aus Kartoffelstärke und pflanzlichem Öl.

Besonders bevorzugt ist ein Ausführungsbeispiel, bei dem die Blätter bei dem Bedrucken mittels eines Druckers von der Druckertinte durchdrungen werden; bei der Druckertinte handelt es sich vorzugsweise um eine Lebensmittelfarbe, also eine gesundheitlich unbedenkliche Tinte.

Die Erfindung stellt somit eine gesundheitlich unbedenkliche Alternative zu dem aus der DE 10 2008 045 188 A1 bekannten Verfahren dar.

Besonders bevorzugt ist weiter ein Ausführungsbeispiel, bei dem die einzelnen Schichtbilder mit einem um das Objekt wiedergegebenen Bereich umlaufenden Streifen mit einem andersfarbigen Streifen umgeben sind.

Die Erfindung schlägt also vor, einen Block zu schaffen, in dem sich ein (beliebiges), von dem Block im Übrigen farblich absetzendes Objekt "versteckt". Dieses Objekt kann dann durch spanabhebendes Bearbeiten des Blocks im Übrigen, also unter Belassung des farbig wiedergegebenen Objekts, herausgearbeitet werden.

Dieses Vorgehen kann dadurch erleichtert werden, dass die einzelnen Schichtbilder mit einem um den das Objekt wiedergebenden Bereich umlaufenden andersfarbigen Streifen versehen sind. Bei dem Herausarbeiten des Objekts wird der Bearbeiter also kurz vor dem Erreichen des Objekts selbst "gewarnt", er wird damit aufgefordert, bei Erreichen dieses Bereichs vorsichtiger zu arbeiten.

Bei Verwendung eines oblatenartigen Materials werden Gesundheitsgefahren, die durch ein Einatmen von abgetragenem Staub oder einem oralen Aufnehmen von Teilen des Blocks entstehen könnten, vermieden. Die Blätter können aber auch aus einem zellulosehaltigen oder filzartigen Material bestehen.

Wenn die Blätter, wie vorgeschlagen, bei dem Bedrucken von der Tinte vollständig durchdrungen werden, erscheint das Objekt einfarbig homogen.

Der Block kann beispielsweise dadurch gebildet werden, dass stärkehaltige Materialien wie Oblaten nach dem Bedrucken mit Lebensmittelfarbe übereinander geschichtet zusammen gepresst und unter Einwirkung von Wasser (vorzugsweise Wasserdampf) miteinander verbunden werden. Bei einer alternativen Ausführung der Erfindung wird der homogene dreidimensionale Block geschaffen, indem stärke- oder zuckerhaltiges Material in die Blätter ein- oder auf die Blätter aufgebracht werden und durch Zugabe von Wasser oder Wasserdampf auf die anschließend aufeinander aufeinander geschichteten Blätter aktiviert wird.

Die Verwendung von Wasserdampf bewirkt ein vollständiges Durchdringen der gepressten Blätter, es vermeidet aber eine zu starke Durchfeuchtung des Materials, der Block trocknet nach einer Dampfbehandlung in kurzer Zeit ohne Weiteres aus.

Den einzelnen Druckertinten kann eine Substanz beigegeben sein, die die Aktivierung des Bindemittels fördert oder behindert. Auch kann den Druckertinten eine Substanz beigegeben sein, die Materialeigenschaften wie Rauheit, Härtgrad oder Elastizität der Blätter in dem mit ihnen bedruckten Bereichen beeinflusst.

## Patentansprüche

1. Verfahren zum Erstellen eines Blocks, in dessen Inneren wenigstens ein sich farblich absetzendes Objekt eingebettet ist, mit den Schritten:
- Errechnen einer Vielzahl von aufeinander liegende Ebenen wiedergebenden Schichtbildern des Objekts mittels eines Computers,
- Bedrucken einer Vielzahl von Blättern mit jeweils einem der Schichtbilder mittels eines Druckers,
- Aufeinanderlegen und Zusammenpressen der bedruckten Schichtbilder und Aktivieren eines in oder auf den Blättern vorhandenen oder auf diese aufgebrachten Bindemittels unter Bildung des Blocks,
wobei
- die Blätter aus einem stärke-, zucker-, zellulosehaltigen und/oder filzartigen Material bestehen,
- die Druckertinte eine gesundheitlich unbedenkliche Tinte ist, und
- das Bindemittel eine Stärke ist, die durch Aufbringen oder Einbringen von Wasser, insbesondere als Wasserdampf, auf die einzelnen Blätter bzw. in den Block aktiviert wird.

2. Verfahren nach einem der vorangehenden Ansprüche, **dadurch gekennzeichnet, dass** die Blätter bei dem Bedrucken von der Tinte durchdrungen werden.

3. Verfahren nach einem der vorangehenden Ansprüche, **dadurch gekennzeichnet, dass** die Druckertinte eine Lebensmittelfarbe ist.

4. Verfahren nach einem der vorangehenden Ansprüche, **dadurch gekennzeichnet, dass** die Schichtbilder mit einem um den das Objekt wiedergebenden Bereich mit mindesten einem umlaufenden andersfarbigen Streifen versehen sind.

5. Verfahren nach einem der vorangehenden Ansprüche, **dadurch gekennzeichnet, dass** die Blätter vor dem Zusammenpressen in einen Pressrahmen eingebracht werden.

6. Verfahren nach einem der vorangehenden Ansprüche, **dadurch gekennzeichnet, dass** der Tinte ein die Aktivierung des Bindemittels und/oder die Materialeigenschaft des mit ihr bedruckten Materials beeinflussende Substanz zugegeben ist.

## Claims

1. A method for producing a block within which at least one differently coloured object is embedded, having the following steps:
- calculating by means of a computer a multiplicity of layered images of the object that reproduce planes lying one on top of the other,
- printing in each case one of the layered images on a multiplicity of sheets by means of a printer,
- placing on top of each other and compressing the printed layered images and activating a binder present in or on the sheets or applied onto these while creating the block,
wherein
- the sheets consist of a starch, sugar, cellulose - containing and/or felt - like material,
- the printing ink is an ink that does not pose any health risk, and
- the binder is a starch that is activated by applying or introducing water, in particular as water vapour, onto the individual sheets or into the block.

2. The method according to Claim 1, **characterized in that** the sheets are permeated by the ink during printing.

3. The method according to one of the preceding claims, **characterized in that** the printing ink is a food dye.

4. The method according to one of the preceding claims, **characterized in that** the layered images are provided with at least one differently coloured strip running circumferentially around the area representing the object.

5. The method according to one of the preceding claims, **characterized in that** the sheets are put in a compression frame prior to being compressed.

6. The method according to one of the preceding claims, **characterized in that** there is added to the ink a substance influencing the activation of the binder and/or the material properties of the material onto which it is printed.

## Revendications

1. Procédé permettant de créer un bloc à l'intérieur duquel au moins un objet de couleur différente est intégré, en procédant aux étapes suivantes :
- Calcul d'une multitude de couches d'images représentant des plans superposés de l'image au moyen d'un ordinateur,
- Impression par imprimante d'une multitude de feuilles représentant chacune une des couches d'images,
- Superposition et compression des couches d'images imprimées, et activation d'un liant présent dans ou sur les feuilles, ou y ayant été appliqué et permettant de former le bloc,
à savoir que
- les feuilles sont dans un matériau contenant de l'amidon, du sucre, de la cellulose et/ou du feutre,
- l'encre d'impression est sans risque pour la santé, et que
- le liant est un amidon s'activant par l'application d'eau, notamment sous forme de vapeur d'eau, sur chacune des feuilles ou à l'intérieur du bloc.

2. Dispositif selon une des revendications ci-avant, **caractérisé en ce que** les feuilles sont perforées lors de l'impression de l'encre.

3. Dispositif selon une des revendications ci-avant, **caractérisé en ce que** l'encre d'impression est une encre alimentaire.

4. Dispositif selon une des revendications ci-avant, **caractérisé en ce que** les couches d'images sont pourvues d'au moins une bande entourant la partie représentant l'objet et étant de couleur différente.

5. Dispositif selon une des revendications ci-avant, **caractérisé en ce que** les feuilles sont insérées dans un bâti de pression avant la compression.

6. Dispositif selon une des revendications ci-avant, **caractérisé en ce que** l'encre est ajoutée à la substance influant l'activation du liant et/ou la propriété du matériau pressé avec elle.
